# EUROPEAN PATENT SPECIFICATION

(11) **EP 4 408 099 B1**
(45) Date of publication and mention of the grant of the patent: **04.11.2026**
(21) Application number: 22872138.7
(22) Date of filing: 23.09.2022
(51) Int. Cl.: H04L 5/00, H04W 72/21, H04W 72/566

(54) **RESOURCE DETERMINATION METHOD AND APPARATUS, AND TERMINAL AND READABLE STORAGE MEDIUM**
RESSOURCENBESTIMMUNGSVERFAHREN UND -VORRICHTUNG SOWIE ENDGERÄT UND LESBARES SPEICHERMEDIUM
PROCÉDÉ ET APPAREIL DE DÉTERMINATION DE RESSOURCE, TERMINAL ET SUPPORT DE STOCKAGE LISIBLE

(30) Priority: 23.09.2021 CN 202111117396
(43) Date of publication of application: 31.07.2024
(73) Proprietor: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2022/120975
(87) International publication number: WO 2023/046094

(56) References cited:
- WO-A1-2020/197333
- CN-A- 110 149 703
- CN-A- 110 719 150
- CN-A- 111 586 850
- CN-A- 111 727 642
- CN-A- 111 835 480
- LENOVO ET AL: "Intra-UE multiplexing enhancement for IIoT/URLLC", vol. RAN WG1, no. e-Meeting; 20210816 - 20210827, 7 August 2021 (2021-08-07), XP052038209, Retrieved from the Internet <URL:https://ftp.3gpp.org/tsg_ran/WG1_RL1/TSGR1_106-e/Docs/R1-2107181.zip R1-2107181.docx> [retrieved on 20210807]
- MODERATOR (OPPO): "Summary#1 of email thread [104b-e-NR-R17-IIoT_URLLC-04]", vol. RAN WG1, no. e-Meeting; 20210512 - 20210520, 19 May 2021 (2021-05-19), XP052012460, Retrieved from the Internet <URL:https://ftp.3gpp.org/tsg_ran/WG1_RL1/TSGR1_105-e/Inbox/R1-2106051.zip R1-2106051 Summary#1 of [105-e-NR-R17-IIoT_URLLC-04] v000.docx> [retrieved on 20210519]
- APPLE INC: "Design of Rel-17 intra-UE multiplexing/prioritization", vol. RAN WG1, no. e-Meeting; 20210510 - 20210527, 27 May 2021 (2021-05-27), XP052015722, Retrieved from the Internet <URL:https://ftp.3gpp.org/tsg_ran/WG1_RL1/TSGR1_105-e/Docs/R1-2106120.zip R1-2106120 Rel-17 URLLC UCI multiplexing design final.docx> [retrieved on 20210527]

## Description

### TECHNICAL FIELD

This application pertains to the field of communication technologies and specifically relates to a resource determining method, an apparatus, a terminal, and a readable storage medium.

### BACKGROUND

The 5th generation mobile communication (5th Generation Mobile Communication, 5G) system needs to adapt to diverse scenarios and business requirements. The 5G system defines three main application scenarios: enhanced mobile broadband (Enhanced Mobile Broadband, eMBB), ultra-reliable and low latency communications (Ultra-reliable and Low Latency Communications, URLLC), and massive machine type communication (Massive Machine Type Communication, mMTC). These application scenarios impose on the system requirements such as high reliability, low latency, large bandwidth, and extensive coverage. Some user equipment (User Equipment, UE) may support various types of services. For example, UE may support both low-latency and high-reliability URLLC services, as well as high-capacity and high-rate eMBB services. In the 5G new radio (New Radio, NR) system, different channels can have varying starting symbols and lengths, potentially leading to transmission resources overlapping in the time domain. However, in a case that there are multiple overlapping physical uplink control channel (Physical Uplink Control Channel, PUCCH) transmissions in one slot, it may compromise the single-carrier characteristics of the UE. Additionally, differences in transmission power may deteriorate channel estimation performance.

In the prior art, when uplink control information (Uplink Control Information, UCI) is transmitted over a PUCCH, UCIs transmitted over a same PUCCH have the same priority index and correspond to one code rate. However, in scenarios where UCIs with different priority indexes are multiplexed on the same PUCCH and the UCIs with different priority indexes use different code rates, how the number of PRBs used for UCI transmission is determined is an urgent problem that needs to be addressed.

R1-2107181 (3GPP) discloses multiplexing mixed priority UCI in PUCCH formats 2/3/4. When a UE would transmit HP UCI in a PUCCH of higher priority index that would overlap in time with a transmission of a PUCCH of lower priority index including LP HARQ-ACK and when the total number of UCI bits is larger than 2, the UE determines a PUCCH resource of a PUCCH configuration with PUCCH format 2 or PUCCH format 3 for multiplexing at least a part of LP UCI with the HP UCI.

R1-2106051 (3GPP) discloses the PUCCH resource determination and mapping for multiplexing between HARQ-ACKs with different priorities. The rate matching equation, and RE mapping rules is reused in Rel-15.

R1-2106120 (3GPP) discloses that if a UE is provided a first interlace of ${M}_{interlace , 0}^{PUCCH}$ PRBs by interlace0 in InterlaceAllocation, the UE has HARQ-ACK, SR and wideband or sub-band CSI reports to transmit, and the UE determines a PUCCH resource with PUCCH format 2, or the UE has HARO-ACK. SR and wideband CSI reports to transmit and the UE determines a PUCCH resource with PUCCH format 3, or the UE has HARQ-ACK, SR and sub-band CSI reports to transmit, and the UE determines a PUCCH resource with PUCCH format 3.

### SUMMARY

Embodiments of this application provide a resource determining method, an apparatus, a terminal, and a readable storage medium, so as to solve the problem of determining the number of PRBs used for UCI transmission in a case that UCIs with different priority indexes are multiplexed on a same PUCCH.

According to a first aspect, a resource determining method is provided, which is defined in claim 1.

According to a second aspect, a resource determining apparatus is provided, which is defined in claim 6.

According to a third aspect, a readable storage medium is provided, which is defined in claim 11.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 is a schematic structural diagram of a wireless communication system to which embodiments of this application are applicable;
FIG. 2 is a schematic flowchart of a resource determining method according to an embodiment of this application;
FIG. 3 is a schematic diagram of a resource mapping method used in the prior art for UCI transmission over a PUCCH;
FIG. 4 is a first schematic diagram of a resource mapping method according to an embodiment of this application;
FIG. 5 is a second schematic diagram of a resource mapping method according to an embodiment of this application;
FIG. 6 is a schematic structural diagram of a resource determining apparatus according to an embodiment of this application;
FIG. 7 is a schematic structural diagram of a terminal according to an embodiment of this application; and
FIG. 8 is a schematic diagram of a hardware structure of a terminal implementing an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

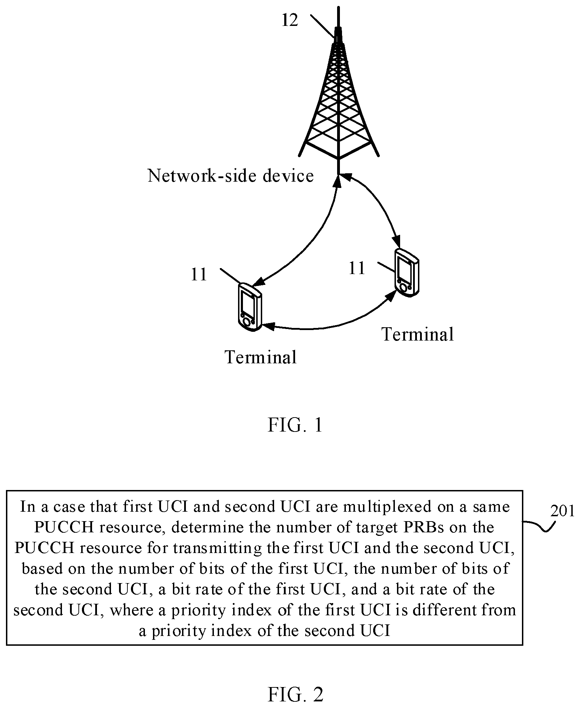

FIG. 1 is a schematic structural diagram of a wireless communication system to which embodiments of this application are applicable. As shown in FIG. 1, the wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture). The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that a specific type of the terminal 11 is not limited in the embodiments of this application. The network-side device 12 may be a base station or a core network. The base station may be referred to as a Node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail a resource determining method provided in the embodiments of this application by using some embodiments and application scenarios thereof with reference to the accompanying drawings.

Embodiments of this application provide a resource determining method. In a case that first UCI and second UCI with priority indexes are multiplexed on a same PUCCH resource, with consideration that UCIs with different priority indexes have different code rates, the number of target physical resource blocks (Physical Resource Block, PRB) on the PUCCH resource used for transmitting the first UCI and the second UCI is determined based on the number of bits of the first UCI, the number of bits of the second UCI, a code rate of the first UCI, and a code rate of the second UCI. This ensures different reliability requirements for UCIs with different priority indexes and improves the effectiveness of the communication system.

FIG. 2 is a schematic flowchart of a resource determining method according to an embodiment of this application. The method is applied to a terminal. As shown in FIG. 2, the method includes the following steps.

Step 201: In a case that first UCI and second UCI are multiplexed on a same PUCCH resource, determine the number of target PRBs on the PUCCH resource for transmitting the first UCI and the second UCI, based on the number of bits of the first UCI, the number of bits of the second UCI, a code rate of the first UCI, and a code rate of the second UCI; where a priority index of the first UCI is different from a priority index of the second UCI.

Optionally, this embodiment of this application may be applied in a 5G NR system. In a case that the first UCI and the second UCI with different priority indexes are multiplexed on the same PUCCH resource, one PUCCH format may be configured with 2 code rates, that is, a code rate for the first UCI and a code rate for the second UCI.

Optionally, the message types of the first UCI and the second UCI may include at least one of the following: hybrid automatic repeat request acknowledgement (Hybrid Automatic Repeat reQuest-ACK, HARQ-ACK), selective repeat (Selective Repeat, SR), and channel state information (Channel State Information, CSI).

Optionally, the priority index of the first UCI is priority index 0 and the priority index of the second UCI is priority index 1; or the priority index of the first UCI is priority index 1 and the priority index of the second UCI is priority index 0.

It should be noted that different priority indexes in the present invention may also be understood as different priorities. For example, the first UCI has a low priority and the second UCI has a high priority; or the first UCI has a high priority and the second UCI has a low priority.

In the resource determining method provided in this embodiment of this application, in a case that UCIs with different priority indexes are multiplexed on the same PUCCH resource, with consideration that UCIs with different priority indexes have different code rates, the number of PRBs used for PUCCH transmission is determined based on the number of bits and code rates of UCIs with different priority indexes. This ensures different reliability requirements for UCIs with different priority indexes and improves the effectiveness of the communication system.

Optionally, step 201 of, in a case that first UCI and second UCI are multiplexed on a same PUCCH resource, determining the number of target PRBs on the PUCCH resource for transmitting the first UCI and the second UCI, based on the number of bits of the first UCI, the number of bits of the second UCI, a code rate of the first UCI, and a code rate of the second UCI is implemented in at least one of the following methods.

Method 1: In a case that the first UCI and the second UCI are multiplexed on the same PUCCH resource and transmitted using a target PUCCH format, determine a first PRB number based on the number of bits of the first UCI and the code rate of the first UCI, and determine a second PRB number based on the number of bits of the second UCI and the code rate of the second UCI, where the number of target PRBs on the PUCCH resource for transmitting the first UCI and the second UCI is the sum of the first PRB number and the second PRB number.

Optionally, the target PUCCH format may include PUCCH format 2 or PUCCH format 3.

Optionally, first, the first PRB number is determined based on the number of bits of the first UCI and the code rate of the first UCI, and the second PRB number is determined based on the number of bits of the second UCI and the code rate of the second UCI; then, the first PRB number and the second PRB number are summed to obtain the number of target PRBs ${M}_{RB , min}^{PUCCH , LP}$ on the PUCCH resource for transmitting the first UCI and the second UCI, that is, ${M}_{RB , min}^{PUCCH} = {M}_{RB , min}^{PUCCH , LP} + {M}_{RB , min}^{PUCCH , HP}$.

Optionally, a method for determining the first PRB number based on the number of bits of the first UCI and the code rate of the first UCI may include: calculating the first PRB number ${M}_{RB , min}^{PUCCH , LP}$ using formulas (1) and (2), based on the number of bits of the first UCI and the code rate of the first UCI, $\left({O}_{UCI}^{LP}+{O}_{CRC}^{LP}\right) \leq {M}_{RB , min}^{PUCCH , LP} ⋅ {N}_{sc , ctrl}^{RB} ⋅ {N}_{symb , UCI}^{PUCCH} ⋅ {Q}_{m} ⋅ {r}_{LP}$ (1) $\left({O}_{UCI}^{LP}+{O}_{CRC}^{LP}\right) > \left({M}_{RB , min}^{PUCCH , LP}-1\right) ⋅ {N}_{sc , ctrl}^{RB} ⋅ {N}_{symb , UCI}^{PUCCH} ⋅ {Q}_{m} ⋅ {r}_{LP}$ (2); and a method for determining the second PRB number based on the number of bits of the second UCI and the code rate of the second UCI may include: calculating the second PRB number ${M}_{RB , min}^{PUCCH , HP}$ using formulas (3) and (4), based on the number of bits of the second UCI and the code rate of the second UCI, $\left({O}_{UCI}^{HP}+{O}_{CRC}^{HP}\right) \leq {M}_{RB , min}^{PUCCH , HP} ⋅ {N}_{sc , ctrl}^{RB} ⋅ {N}_{symb , UCI}^{PUCCH} ⋅ {Q}_{m} ⋅ {r}_{HP}$ (3) $\left({O}_{UCI}^{HP}+{O}_{CRC}^{HP}\right) > \left({M}_{RB , min}^{PUCCH , HP}-1\right) ⋅ {N}_{sc , ctrl}^{RB} ⋅ {N}_{symb , UCI}^{PUCCH} ⋅ {Q}_{m} ⋅ {r}_{HP}$ (4); where
the ${O}_{UCI}^{LP}$ represents the number of bits of the first UCI; the ${O}_{CRC}^{LP}$ represents the number of cyclic redundancy check (Cyclic Redundancy Check, CRC) bits corresponding to the first UCI; the ${N}_{sc , ctrl}^{RB}$ represents the number of equivalent subcarriers occupied by control information in each RB, where specifically, for PUCCH format 2, ${N}_{sc , ctrl}^{RB} = {N}_{sc}^{RB} - 4$; or if the PUCCH format 2 contains an orthogonal cover code (Orthogonal cover code, OCC) of length $\left.{N}_{SF}^{PUCCH , 2},{N}_{sc , ctrl}^{RB}=\left({N}_{sc}^{RB}-4\right)/{N}_{SF}^{PUCCH , 2}\right)$; and for PUCCH format 3, ${N}_{sc , ctrl}^{RB} = {N}_{sc}^{RB}$; or if the PUCCH format 3 contains an OCC of length ${N}_{SF}^{PUCCH , 3} , {N}_{sc , ctrl}^{RB} = {N}_{sc}^{RB} / {N}_{SF}^{PUCCH , 3}$, where ${N}_{sc}^{RB}$ represents the number of subcarriers within each RB; the ${N}_{symb , UCI}^{PUCCH}$ represents the number of symbols occupied by the target PUCCH format or the number of symbols occupied by the UCI in the target PUCCH format, where specifically, for PUCCH format 2, ${N}_{symb , UCI}^{PUCCH}$ equals the number of symbols occupied by the PUCCH format; and for PUCCH format 3, ${N}_{symb , UCI}^{PUCCH}$ equals the number of symbols occupied by PUCCH format 3 except for the symbols occupied by the DMRS, that is, the number of symbols occupied by UCI; the *Qₘ* represents a modulation and coding order, where specifically, for PUCCH format 3, if the modulation scheme is pi/2-BPSK, *Qₘ* = 1; and if the modulation scheme is QPSK, for PUCCH format 2, *Qₘ* = 2; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in a case that the target PUCCH format is PUCCH format 3, the first PRB number is an integer multiple of 2, 3, or 5 and the second PRB number is an integer multiple of 2, 3, or 5. Refer to formulas (7) and (8): $the first PRB number {M}_{RB , min}^{PUCCH , LP} = {2}^{{α}_{2}} ⋅ {3}^{{α}_{3}} ⋅ {5}^{{α}_{5}}$ (7) $the second PRB number {M}_{RB , min}^{PUCCH , HP} = {2}^{{α}_{21}} ⋅ {3}^{{α}_{31}} ⋅ {5}^{{α}_{51}}$ (8), where
*α*₂, *α*₃, *α*₅, *α*₂₁, *α*₃₁, and *α*₅₁ are all non-negative integers.

Optionally, in case that the target PUCCH format is PUCCH format 3, the number of target PRBs on the PUCCH resource for transmitting the first UCI and the second UCI is an integer multiple of 2, 3, or 5. Refer to formula (9). $the number of target PRBs {M}_{RB , min}^{PUCCH} = {2}^{{α}_{22}} ⋅ {3}^{{α}_{32}} ⋅ {5}^{{α}_{52}}$ (9) where
*α*₂₂, *α*₃₂, and *α*₅₂ are all non-negative integers.

Optionally, after the first PRB number and the second PRB number are determined based on method 1, an implementation in which a terminal performs rate matching and resource mapping on the PUCCH resource may include: performing rate matching and resource mapping for the first UCI within PRBs of the first PRB number; and performing rate matching and resource mapping for the second UCI within PRBs of the second PRB number.

Method 2: In a case that the first UCI and the second UCI are multiplexed on the same PUCCH resource and transmitted using a target PUCCH format, calculate the number of target PRBs ${M}_{RB , min}^{PUCCH}$ on the PUCCH resource for transmitting the first UCI and the second UCI using formulas (5) and (6), based on the number of bits of the first UCI, the number of bits of the second UCI, the code rate of the first UCI, and the code rate of the second UCI, $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{RB , min}^{PUCCH} ⋅ {N}_{sc , ctrl}^{RB} ⋅ {N}_{symb , UCI}^{PUCCH} ⋅ {Q}_{m}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6), where
the ${O}_{UCI}^{LP}$ represents the number of bits of the first UCI; the ${O}_{CRC}^{LP}$ represents the number of cyclic redundancy check bits corresponding to the first UCI; the ${N}_{sc , ctrl}^{RB}$ represents the number of equivalent subcarriers occupied by control information in each RB, where specifically, for PUCCH format 2, ${N}_{sc , ctrl}^{RB} = {N}_{sc}^{RB} - 4$; or if the PUCCH format 2 contains an OCC of length $\left.{N}_{SF}^{PUCCH , 2},{N}_{sc , ctrl}^{RB}=\left({N}_{sc}^{RB}-4\right)/{N}_{SF}^{PUCCH , 2}\right)$; and for PUCCH format 3, ${N}_{sc , ctrl}^{RB} = {N}_{sc}^{RB}$ *;* or if the PUCCH format 3 contains an OCC of length ${N}_{SF}^{PUCCH , 3} , {N}_{sc , ctrl}^{RB} = {N}_{sc}^{RB} / {N}_{SF}^{PUCCH , 3}$ , where ${N}_{sc}^{RB}$ represents the number of subcarriers within each RB; the ${N}_{symb , UCI}^{PUCCH}$ represents the number of symbols occupied by the target PUCCH format or the number of symbols occupied by the UCI in the target PUCCH format, where specifically, for PUCCH format 2, ${N}_{symb , UCI}^{PUCCH}$ equals the number of symbols occupied by the PUCCH format; and for PUCCH format 3, ${N}_{symb , UCI}^{PUCCH}$ equals the number of symbols occupied by PUCCH format 3 except for the symbols occupied by the DMRS, that is, the number of symbols occupied by UCI; the *Qₘ* represents a modulation and coding order, where specifically, for PUCCH format 3, if the modulation scheme is pi/2-BPSK, *Qₘ* = 1; and if the modulation scheme is QPSK, for PUCCH format 2, *Qₘ* = 2; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in a case that the target PUCCH format is PUCCH format 3, in method 2, the number of target PRBs on the PUCCH resource for transmitting the at least two UCIs is an integer multiple of 2, 3, or 5. Refer to formula (9).

Optionally, in a case that a first interlace (i.e. a first one interlace) is configured on the PUCCH resource, the terminal may determine the interlace used for PUCCH transmission in at least one of the following methods.

Method a: In a case that a first interlace and a second interlace (i.e. a second one interlace) are configured on the PUCCH resource, transmit the first UCI and the second UCI on the first interlace and the second interlace.

Method b: In a case that the first interlace is configured on the PUCCH resource, transmit the first UCI and the second UCI on the first interlace.

Method c: In a case that the first interlace is configured on the PUCCH resource and the number of PRBs included in the first interlace meets a target condition, transmit the first UCI and the second UCI on the first interlace.

For example, the target condition may include: the number of PRBs ${M}_{interlace , 0}^{PUCCH}$ included in the first interlace meets formula (10): $\frac{{O}_{UCI}^{HP} + {O}_{CRC}^{HP}}{{r}_{HP}} + \frac{{O}_{UCI}^{HP} + {O}_{CRC}^{LC}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10), where
${M}_{interlace , 0}^{PUCCH}$ represents the number of PRBs included in the first interlace; the ${O}_{UCI}^{LP}$ represents the number of bits of the first UCI; the ${O}_{CRC}^{LP}$ represents the number of cyclic redundancy check bits corresponding to the first UCI; the ${O}_{UCI}^{HP}$ represents the number of bits of the second UCI; the ${O}_{CRC}^{HP}$ represents the number of cyclic redundancy check bits corresponding to the second UCI; the ${N}_{sc , ctrl}^{RB}$ represents the number of equivalent subcarriers occupied by control information in each RB; the ${N}_{symb , UCI}^{PUCCH}$ represents the number of symbols occupied by the target PUCCH format or the number of symbols occupied by UCI in the target PUCCH format; the *Qₘ* represents a modulation and coding order; the *r_{LP}* represents the code rate of the first UCI; and the *r_{HP}* represents the code rate of the second UCI.

Method d: In a case that the first interlace and the second interlace are configured on the PUCCH resource and the number of PRBs included in the first interlace does not meet a target condition, transmit the first UCI and the second UCI on the first interlace and the second interlace.

After the number of target PRBs on the PUCCH resource for transmitting the first UCI and the second UCI is determined based on method 2, an implementation in which the terminal performs rate matching and resource mapping on the PUCCH resource may include: performing rate matching and resource mapping for both the first UCI and the second UCI within PRBs of the number of target PRBs.

Specifically,
the terminal first determines the number of second resource elements REs meeting the code rate of the second UCI within PRBs of the number of target PRBs, based on the number of bits of the second UCI and the code rate of the second UCI; performs rate matching and resource mapping for the second UCI on the second REs; and then performs rate matching and resource mapping for the first UCI on REs, except for the second REs and REs used by the DMRS, within PRBs of the number of target PRBs.

The following describes the resource determining method provided in this embodiment of this application by taking the scenario in which the first UCI has a low priority index (LP) HARQ-ACK and the second UCI has a high priority index (HP) HARQ-ACK as an example.

A terminal transmits a PUCCH on the same PUCCH resource using PUCCH format 2 or PUCCH format 3. The PUCCH carries an LP HARQ-ACK and an HP HARQ-ACK. The number of bits of the LP HARQ-ACK is ${O}_{ACK}^{LP}$, the number of CRC bits corresponding to the LP HARQ-ACK is ${O}_{CRC}^{LP}$; the number of bits of the HP HARQ-ACK is ${O}_{ACK}^{HP}$; and the number of CRC bits corresponding to the HP HARQ-ACK is ${O}_{CRC}^{HP}$. The PUCCH resource corresponding to the PUCCH includes ${M}_{RB}^{PUCCH}$ PRBs (for example, the number of PRBs included in the PUCCH resource can be configured for RRC).The terminal determines a minimum number of PRBs ${M}_{RB , min}^{PUCCH}$. ${M}_{RB , min}^{PUCCH}$ is less than or equal to the ${M}_{RB}^{PUCCH}$ configured by a higher layer. The method for determining ${M}_{RB , min}^{PUCCH}$ includes at least one of the following:
Method (1): The terminal determines ${M}_{RB , min}^{PUCCH , LP}$ based on the number of bits of LP HARQ-ACK and the code rate of LP HARQ-ACK, determines ${M}_{RB , min}^{PUCCH , HP}$ based on the number of bits of HP HARQ-ACK and the code rate of HP HARQ-ACK, and then calculates ${M}_{RB , min}^{PUCCH}$, for example, ${M}_{RB , min}^{PUCCH} = {M}_{RB , min}^{PUCCH , LP} + {M}_{RB , min}^{PUCCH , HP}$; where $\left({O}_{ACK}^{LP}+{O}_{CRC}^{LP}\right) \leq {M}_{RB , min}^{PUCCH , LP} ⋅ {N}_{sc , ctrl}^{RB} ⋅ {N}_{symb , ACK}^{PUCCH} ⋅ {Q}_{m} ⋅ {r}_{LP}$ (11) $\left({O}_{ACK}^{LP}+{O}_{CRC}^{LP}\right) > \left({M}_{RB , min}^{PUCCH , LP}-1\right) ⋅ {N}_{sc , ctrl}^{RB} ⋅ {N}_{symb , ACK}^{PUCCH} ⋅ {Q}_{m} ⋅ {r}_{LP}$ (12) $\left({O}_{ACK}^{HP}+{O}_{CRC}^{HP}\right) \leq {M}_{RB , min}^{PUCCH , HP} ⋅ {N}_{sc , ctrl}^{RB} ⋅ {N}_{symb , ACK}^{PUCCK} ⋅ {Q}_{m} ⋅ {r}_{HP}$ (13) $\left({O}_{ACK}^{HP}+{O}_{CRC}^{HP}\right) > \left({M}_{RB , min}^{PUCCH , HP}-1\right) ⋅ {N}_{sc , ctrl}^{RB} ⋅ {N}_{symb , ACK}^{PUCCH} ⋅ {Q}_{m} ⋅ {r}_{HP}$ (14); where
the ${N}_{sc , ctrl}^{RB}$ represents the number of equivalent subcarriers occupied by control information in each RB, where specifically, for PUCCH format 2, ${N}_{sc , ctrl}^{RB} = {N}_{sc}^{RB} - 4$; or if the PUCCH format 2 contains an OCC of length $\left.{N}_{SF}^{PUCCH , 2},{N}_{sc , ctrl}^{RB}=\left({N}_{sc}^{RB}-4\right)/{N}_{SF}^{PUCCH , 2}\right)$; and for PUCCH format 3, ${N}_{sc , ctrl}^{RB} = {N}_{sc}^{RB}$; or if the PUCCH format 3 contains an OCC of length ${N}_{SF}^{PUCCH , 3} , {N}_{sc , ctrl}^{RB} = {N}_{sc}^{RB} / {N}_{SF}^{PUCCH , 3}$, where ${N}_{sc}^{RB}$ represents the number of subcarriers within each RB; the ${N}_{symb , ACK}^{PUCCH}$ represents the number of symbols occupied by the target PUCCH format or the number of symbols occupied by the UCI in the target PUCCH format, where specifically, for PUCCH format 2, ${N}_{symb , ACK}^{PUCCH}$ equals the number of symbols occupied by the PUCCH format; and for PUCCH format 3, ${N}_{symb , ACK}^{PUCCH}$ equals the number of symbols occupied by PUCCH format 3 except for the symbols occupied by the DMRS, that is, the number of symbols occupied by UCI; the *Qₘ* represents a modulation and coding order, where specifically, for PUCCH format 3, if the modulation scheme is pi/2-BPSK, *Qₘ* = 1; and if the modulation scheme is QPSK, for PUCCH format 2, *Qₘ* = 2; the *r_{LP}* represents the code rate of LP HARQ-ACK; and the *r_{HP}* represents the code rate of HP HARQ-ACK.

Optionally, based on method (1), in a case that a terminal transmits a PUCCH using PUCCH format 3 on the same PUCCH resource, with the need of performing a DFT transformation prior to transmission, it is required that both ${M}_{RB , min}^{PUCCH , LP}$ and ${M}_{RB , min}^{PUCCH , HP}$ meet the requirement of being integer multiples of 2, 3 or 5. Refer to formulas (7) and (8).

Alternatively, in a case that a terminal transmits a PUCCH using PUCCH format 3 on the same PUCCH resource, with the need of performing a DFT transformation prior to transmission, it is required that ${M}_{RB , min}^{PUCCH}$ meets the requirement of being integer multiples of 2, 3 or 5. Refer to formula (9).

Method (2): The terminal determines ${M}_{RB , min}^{PUCCH , HP}$ based on the number of bits of LP HARQ-ACK, the code rate of LP HARQ-ACK, the number of bits of HP HARQ-ACK, and the code rate of HP HARQ-ACK; where $\frac{{O}_{ACK}^{HP} + {O}_{CRC}^{HP}}{{r}_{HP}} + \frac{{O}_{ACK}^{LP} + {O}_{CRC}^{LP}}{{r}_{LP}} \leq {M}_{RB , min}^{PUCCH} ⋅ {N}_{sc , ctrl}^{RB} ⋅ {N}_{symb , ACK}^{PUCCH} ⋅ {Q}_{m}$ (5) $\frac{{O}_{ACK}^{HP} + {O}_{CRC}^{HP}}{{r}_{HP}} + \frac{{O}_{ACK}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , ACK}^{PUCCH} ⋅ {Q}_{m}$ (6), where
the ${N}_{sc , ctrl}^{RB}$ represents the number of equivalent subcarriers occupied by control information in each RB, where specifically, for PUCCH format 2, ${N}_{sc , ctrl}^{RB} = {N}_{sc}^{RB} - 4$; or if the PUCCH format 2 contains an OCC of length $\left.{N}_{SF}^{PUCCH , 2},{N}_{sc , ctrl}^{RB}=\left({N}_{sc}^{RB}-4\right)/{N}_{SF}^{PUCCH , 2}\right)$; and for PUCCH format 3, ${N}_{sc , ctrl}^{RB} = {N}_{sc}^{RB}$; or if the PUCCH format 3 contains an OCC of length ${N}_{SF}^{PUCCH , 3} , {N}_{sc , ctrl}^{RB} = {N}_{sc}^{RB} / {N}_{SF}^{PUCCH , 3}$, where ${N}_{sc}^{RB}$ represents the number of subcarriers within each RB; the ${N}_{symb , ACK}^{PUCCH}$ represents the number of symbols occupied by the target PUCCH format or the number of symbols occupied by the UCI in the target PUCCH format, where specifically, for PUCCH format 2, ${N}_{symb , ACK}^{PUCCH}$ equals the number of symbols occupied by the PUCCH format; and for PUCCH format 3, ${N}_{symb , ACK}^{PUCCH}$ equals the number of symbols occupied by PUCCH format 3 except for the symbols occupied by the DMRS, that is, the number of symbols occupied by UCI; the *Qₘ* represents a modulation and coding order, where specifically, for PUCCH format 3, if the modulation scheme is pi/2-BPSK, *Qₘ* = 1; and if the modulation scheme is QPSK, for PUCCH format 2, *Qₘ* = 2; the *r_{LP}* represents the code rate of LP HARQ-ACK; and the *r_{HP}* represents the code rate of HP HARQ-ACK.

Optionally, based on method (2), in a case that a terminal transmits a PUCCH using PUCCH format 3 on the same PUCCH resource, with the need of performing a DFT transformation prior to transmission, it is required that ${M}_{RB , min}^{PUCCH}$ meets the requirement of being integer multiples of 2, 3 or 5. Refer to formula (9).

Optionally, in a case that the PUCCH used by the terminal to transmit the LP HARQ-ACK and the HP HARQ-ACK is configured with a first interlace, the terminal may determine the interlace for the PUCCH transmission in at least one of the following methods.

Method (a): In a case that a first interlace and a second interlace are configured on the PUCCH resource, transmit the LP HARQ-ACK and the HP HARQ-ACK on the first interlace and the second interlace.

Method (b): In a case that the first interlace is configured on the PUCCH resource, transmit the LP HARQ-ACK and the HP HARQ-ACK on the first interlace.

Method (c): In a case that the first interlace is configured on the PUCCH resource and the number of PRBs included in the first interlace meets a target condition, transmit the LP HARQ-ACK and the HP HARQ-ACK on the first interlace.

For example, the target condition may include: the number of PRBs ${M}_{interlace , 0}^{PUCCH}$ included in the first interlace meets formula (15): $\frac{{O}_{ACK}^{HP} + {O}_{CRC}^{HP}}{{r}_{HP}} + \frac{{O}_{ACK}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , ACK}^{PUCCH} ⋅ {Q}_{m}$ (15), where
${M}_{interlace , 0}^{PUCCH}$ represents the number of PRBs included in the first interlace; the ${O}_{ACK}^{LP}$ represents the number of bits of the LP HARQ-ACK; the ${O}_{CRC}^{LP}$ represents the number of cyclic redundancy check bits corresponding to the LP HARQ-ACK; the ${O}_{ACK}^{HP}$ represents the number of bits of the HP HARQ-ACK; the ${O}_{CRC}^{HP}$ represents the number of cyclic redundancy check bits corresponding to the HP HARQ-ACK; the ${N}_{sc , ctrl}^{RB}$ represents the number of equivalent subcarriers occupied by control information in each RB, where specifically, for PUCCH format 2, ${N}_{sc , ctrl}^{RB} = {N}_{sc}^{RB} - 4$; or if the PUCCH format 2 contains an OCC of length $\left.{N}_{SF}^{PUCCH , 2},{N}_{sc , ctrl}^{RB}=\left({N}_{sc}^{RB}-4\right)/{N}_{SF}^{PUCCH , 2}\right)$ ; and for PUCCH format 3, ${N}_{sc , ctrl}^{RB} = {N}_{sc}^{RB}$; or if the PUCCH format 3 contains an OCC of length ${N}_{SF}^{PUCCH , 3} , {N}_{sc , ctrl}^{RB} = {N}_{sc}^{RB} / {N}_{SF}^{PUCCH , 3}$, where ${N}_{sc}^{RB}$ represents the number of subcarriers within each RB; the ${N}_{symb , ACK}^{PUCCH}$ represents the number of symbols occupied by the target PUCCH format or the number of symbols occupied by the UCI in the target PUCCH format, where specifically, for PUCCH format 2, ${N}_{symb , ACK}^{PUCCH}$ equals the number of symbols occupied by the PUCCH format; and for PUCCH format 3, ${N}_{symb , ACK}^{PUCCH}$ equals the number of symbols occupied by PUCCH format 3 except for the symbols occupied by the DMRS, that is, the number of symbols occupied by UCI; the *Qₘ* represents a modulation and coding order, where specifically, for PUCCH format 3, if the modulation scheme is pi/2-BPSK, *Qₘ* = 1; and if the modulation scheme is QPSK, for PUCCH format 2, *Qₘ* = 2; the *r_{LP}* represents the code rate of the LP HARQ-ACK; and the *r_{HP}* represents the code rate of the HP HARQ-ACK.

Method (d): In a case that the first interlace and the second interlace are configured on the PUCCH resource and the number of PRBs included in the first interlace does not meet a target condition, transmit the LP HARQ-ACK and the HP HARQ-ACK on the first interlace and the second interlace.

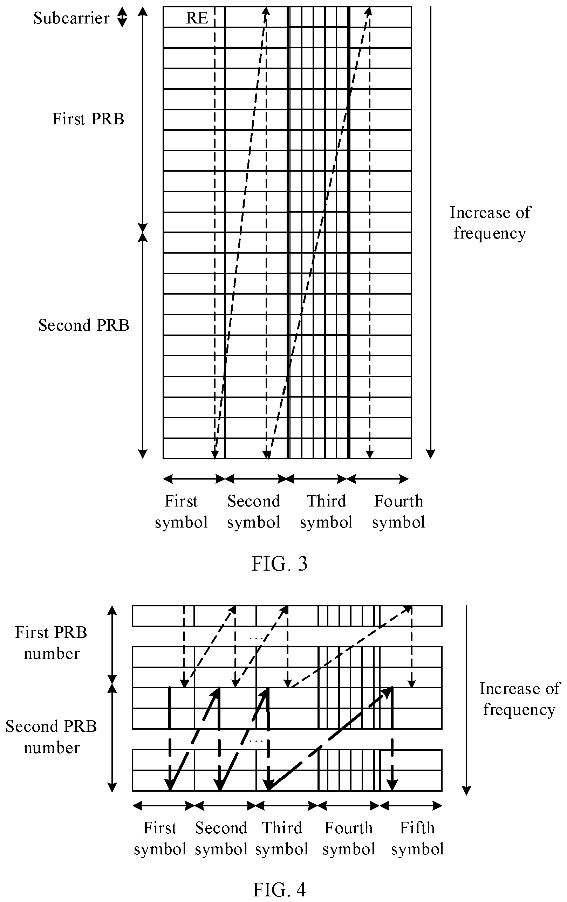

In the prior art, a frequency domain prioritized resource mapping method is used for UCI transmission over the PUCCH. FIG. 3 is a schematic diagram of a resource mapping method used in the prior art for UCI transmission over the PUCCH. As shown in FIG. 3, after the UE has performed rate matching and code modulation within determined PRBs on the entire PUCCH resource, the UE performs resource mapping in a frequency domain prioritized manner, that is, the UE maps the first RE of the first OFDM symbol (corresponding to the first symbol in the figure) first, then in a frequency-increasing manner, maps the second RE, the third RE, ... until the last RE of the first OFDM symbol. Then, the UE performs mapping in the same manner by starting from the first RE of the second OFDM symbol, until the last RE of the last symbol of the PUCCH resource. It should be noted that UCI cannot be mapped on the RE for the DMRS, for example, the third symbol marked with vertical grids in FIG. 3 is used by the DMRS, and UCI is not mapped on the third symbol.

After ${M}_{RB , min}^{PUCCH , LP}$ and ${M}_{RB , min}^{PUCCH , HP}$ are determined based on method (1) provided in the foregoing embodiment of this application, an implementation in which the terminal performs rate matching and resource mapping on the PUCCH resource may include at least one of the following methods.

Method A: The terminal performs rate matching and resource mapping for LP HARQ-ACK within ${M}_{RB , min}^{PUCCH , LP}$ PRBs on the PUCCH resource, and performs rate matching and resource mapping for HP HARQ-ACK within ${M}_{RB , min}^{PUCCH , HP}$ PRBs on the PUCCH resource.

The total length of the sequence output from rate matching for LP HARQ-ACK is ${E}_{tot}^{LP}$, and ${E}_{tot}^{LP}$ can be calculated based on ${M}_{RB , min}^{PUCCH , LP}$.

For example, in a case that the terminal uses PUCCH format 2, ${E}_{tot}^{LP}$ is calculated using formula (16): ${E}_{tot}^{LP} = 16 ⋅ {N}_{symb , UCI}^{PUCCH , 2} ⋅ {M}_{RB , min}^{PUCCH , LP} / {N}_{SF}^{PUCCH , 2}$ (16), where
the ${N}_{symb , UCI}^{PUCCH , 2}$ represents the number of symbols occupied by PUCCH format 2; the ${N}_{SF}^{PUCCH , 2}$ represents the spreading factor of PUCCH format 2; and the ${N}_{SF}^{PUCCH , 2}$ is configured by a network-side device via radio resource control (Radio Resource Control, RRC) signaling or is predefined in a protocol.

For another example, in a case that the terminal uses PUCCH format 3, ${E}_{tot}^{LP}$ is calculated using formula (17): ${E}_{tot}^{LP} = 12 ⋅ {Q}_{m} ⋅ {N}_{symb , UCI}^{PUCCH , 3} ⋅ {M}_{RB , min}^{PUCCH , LP} / {N}_{SF}^{PUCCH , 3}$ (17), where
the ${N}_{symb , UCI}^{PUCCH , 3}$ represents the number of symbols occupied by the UCI in PUCCH format 3, that is, the number of all symbols in the PUCCH except for the symbols occupied by the DMRS; the ${N}_{SF}^{PUCCH , 3}$ represents the spreading factor of PUCCH format 3; the ${N}_{SF}^{PUCCH , 3}$ is configured by the network-side device via RRC signaling or is predefined in a protocol; and the *Qₘ* represents a modulation and coding order, for example, for QPSK, *Qₘ* = 2, and for π/2-BPSK, *Qₘ* = 1.

The total length of the sequence output from rate matching for HP HARQ-ACK is ${E}_{tot}^{HP}$, and ${E}_{tot}^{HP}$ can be calculated based on ${M}_{RB , min}^{PUCCH , HP}$.

For example, in a case that the terminal uses PUCCH format 2, ${E}_{tot}^{HP}$ is calculated using formula (18): ${E}_{tot}^{HP} = 16 ⋅ {N}_{symb , UCI}^{PUCCH , 2} ⋅ {M}_{RB , min}^{PUCCH , HP} / {N}_{SF}^{PUCCH , 2}$ (18), where
the ${N}_{symb , UCI}^{PUCCH , 2}$ represents the number of symbols occupied by PUCCH format 2; the ${N}_{SF}^{PUCCH , 2}$ represents the spreading factor of PUCCH format 2; and the ${N}_{SF}^{PUCCH , 2}$ is configured by the network-side device via RRC signaling or is predefined in a protocol.

For another example, in a case that the terminal uses PUCCH format 3, ${E}_{tot}^{HP}$ is calculated using formula (19): ${E}_{tot}^{HP} = 12 ⋅ {Q}_{m} ⋅ {N}_{symb , UCI}^{PUCCH , 3} ⋅ {M}_{RB , min}^{PUCCH , HP} / {N}_{SF}^{PUCCH , 3}$ (19), where
the ${N}_{symb , UCI}^{PUCCH , 3}$ represents the number of symbols occupied by the UCI in PUCCH format 3, that is, the number of all symbols in the PUCCH except for the symbols occupied by the DMRS; the ${N}_{SF}^{PUCCH , 3}$ represents the spreading factor of PUCCH format 3; the ${N}_{SF}^{PUCCH , 3}$ is configured by the network-side device via radio resource control (Radio Resource Control, RRC) signaling or is predefined in a protocol; and the *Qₘ* represents a modulation and coding order.

FIG. 4 is a first schematic diagram of a resource mapping method according to an embodiment of this application. As shown in FIG. 4, rate matching and resource mapping are performed for LP HARQ-ACK within the front first PRB number (for example ${M}_{RB , min}^{PUCCH , LP}$) PRBs on the PUCCH resource (see the REs involved by the thin dashed lines in FIG. 4), and rate matching and resource mapping are performed for HP HARQ-ACK within the second PRB number after the first PRB number (for example ${M}_{RB , min}^{PUCCH , HP}$) PRBs (see the REs involved by the thick dashed lines in FIG. 4). It should be noted that rate matching and resource mapping can be performed for LP HARQ-ACK within the last ${M}_{RB , min}^{PUCCH , LP}$ PRBs on the PUCCH resource (within the determined ${M}_{RB , min}^{PUCCH}$ PRBs). It should be noted that UCI cannot be mapped on the RE for the DMRS, for example, the fourth symbol marked with vertical grids in FIG. 4 is used by the DMRS, and UCI is not mapped on the fourth symbol.

Method B: The terminal performs rate matching and resource mapping for both LP HARQ-ACK and HP HARQ-ACK within ${M}_{RB , min}^{PUCCH}$ PRBs on the PUCCH resource.

Optionally, the terminal may first determine the minimum number of REs meeting the code rate of the LP HARQ-ACK within ${M}_{RB , min}^{PUCCH}$ PRBs based on the number of bits of the LP HARQ-ACK and the code rate of the LP HARQ-ACK; perform rate matching and resource mapping for the LP HARQ-ACK on the REs of the number of the minimum number of REs; and perform rate matching and resource mapping for the HP HARQ-ACK on REs, except for the minimum number of REs and the REs used by the DMRS, within the ${M}_{RB , min}^{PUCCH}$ PRBs..

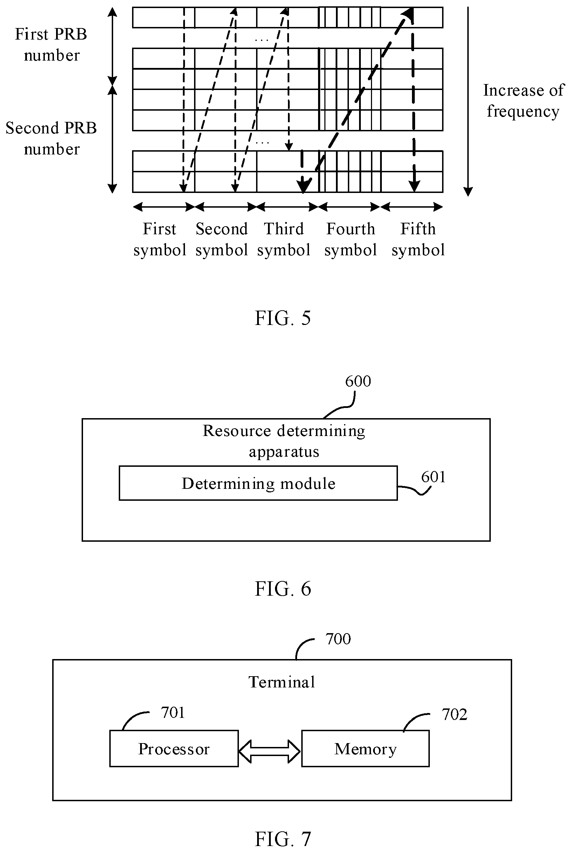

Specifically, the total length of the sequence output from rate matching for LP HARQ-ACK is ${E}_{tot}^{LP}$. For example, the process for calculating ${E}_{tot}^{LP}$ includes:
calculating the minimum number of REs ${N}_{LP , min}^{RE}$ meeting the code rate of the LP HARQ-ACK based on the number of bits of the LP HARQ-ACK and the code rate of the LP HARQ-ACK using formulas (20) and (21), $\left({O}_{ACK}^{LP}+{O}_{CRC}^{LP}\right) \leq {N}_{LP , min}^{RE} ⋅ {Q}_{m} ⋅ {r}_{LP}$ (20) $\left({O}_{ACK}^{LP}+{O}_{CRC}^{LP}\right) > \left({N}_{LP , min}^{RE}-1\right) ⋅ {Q}_{m} ⋅ {r}_{LP}$ (21), where
in a case that the terminal uses PUCCH format 2, formulas (22) and (23) are used to calculate the total length ${E}_{tot}^{LP}$ of the sequence output from rate matching for LP HARQ-ACK, and the total length ${E}_{tot}^{HP}$ of the sequence output from rate matching for HP HARQ-ACK, ${E}_{tot}^{LP} = {N}_{LP , min}^{RE}$ (22) ${E}_{tot}^{HP} = 16 ⋅ {N}_{symb , UCI}^{PUCCH , 2} ⋅ {M}_{RB , min}^{PUCCH} / {N}_{SF}^{PUCCH , 2} - {E}_{tot}^{LP}$ (23), where
in a case that the terminal uses PUCCH format 3, the total length ${E}_{tot}^{LP}$ of the sequence output from rate matching for LP HARQ-ACK and the total length ${E}_{tot}^{HP}$ of the sequence output from rate matching for HP HARQ-ACK are calculated using formulas (24) and (25): ${E}_{tot}^{LP} = {N}_{LP , min}^{RE} ⋅ {Q}_{m}$ (24) ${E}_{tot}^{HP} = 12 ⋅ {Q}_{m} ⋅ {M}_{RB , min}^{PUCCH} ⋅ {N}_{sc , ctrl}^{RB} ⋅ {N}_{symb , UCI}^{PUCCH} / {N}_{SF}^{PUCCH , 3} - {E}_{tot}^{LP}$ (25), where
FIG. 5 is a second schematic diagram of a resource mapping method according to an embodiment of this application. As shown in FIG. 5, rate matching and resource mapping are performed for the LP HARQ-ACK on the minimum number of REs (see REs involved by the thin dashed lines in FIG. 5) meeting the code rate of the LP HARQ-ACK; and rate matching and resource mapping are performed for the HP HARQ-ACK on REs (see the REs involved by the thick dashed line in FIG. 5), except for the minimum number of REs and the REs used by the DMRS, within the ${M}_{RB , min}^{PUCCH}$ PRBs. It should be noted that UCI cannot be mapped on the RE for the DMRS, for example, the fourth symbol marked with vertical grids in FIG. 5 is used by the DMRS, and HP HARQ-ACK is not mapped on the fourth symbol.

Optionally, the terminal may first determine the minimum number of REs meeting the code rate of the HP HARQ-ACK within ${M}_{RB , min}^{PUCCH}$ PRBs based on the number of bits of the HP HARQ-ACK and the code rate of the HP HARQ-ACK; perform rate matching and resource mapping for the HP HARQ-ACK on the REs of the number of the minimum number of REs; and perform rate matching and resource mapping for the LP HARQ-ACK on REs, except for the minimum number of REs and the REs used by the DMRS, within the ${M}_{RB , min}^{PUCCH}$ PRBs.

It should be noted that the resource determining method according to this embodiment of this application may be executed by a resource determining apparatus or a control module for executing the resource determining method in the resource determining apparatus. In this embodiment of this application, the resource determining method being executed by the resource determining apparatus is used as an example to describe the resource determining apparatus according to this embodiment of this application.

FIG. 6 is a schematic structural diagram of a resource determining apparatus according to an embodiment of this application. As shown in FIG. 6, the resource determining apparatus 600 includes:
a determining module 601 configured to: in a case that first UCI and second UCI are multiplexed on a same PUCCH resource, determine the number of target PRBs on the PUCCH resource for transmitting the first UCI and the second UCI, based on the number of bits of the first UCI, the number of bits of the second UCI, a code rate of the first UCI, and a code rate of the second UCI; where a priority index of the first UCI is different from a priority index of the second UCI.

In the resource determining apparatus provided in this embodiment of this application, in a case that UCIs with different priority indexes are multiplexed on the same PUCCH resource, with consideration that UCIs with different priority indexes have different code rates, the number of PRBs used for PUCCH transmission is determined based on the number of bits and code rates of UCIs with different priority indexes. This ensures different reliability requirements for UCIs with different priority indexes and improves the effectiveness of the communication system.

Optionally, the determining module 601 is specifically configured to:
in a case that the first UCI and the second UCI are multiplexed on the same PUCCH resource and transmitted using a target PUCCH format, determine a first PRB number based on the number of bits of the first UCI and the code rate of the first UCI, and
determine a second PRB number based on the number of bits of the second UCI and the code rate of the second UCI, where
the number of target PRBs on the PUCCH resource for transmitting the first UCI and the second UCI is the sum of the first PRB number and the second PRB number.

Optionally, the determining module 601 is specifically configured to:
calculate the first PRB number ${M}_{RB , min}^{PUCCH , LP}$ using formulas (1) and (2), based on the number of bits of the first UCI and the code rate of the first UCI, $\left({O}_{UCI}^{LP}+{O}_{CRC}^{LP}\right) \leq {M}_{RB , min}^{PUCCH , LP} ⋅ {N}_{sc , ctrl}^{RB} ⋅ {N}_{symb , UCI}^{PUCCH} ⋅ {Q}_{m} ⋅ {r}_{LP}$ (1) $\left({O}_{UCI}^{LP}+{O}_{CRC}^{LP}\right) > \left({M}_{RB , min}^{PUCCH , LP}-1\right) ⋅ {N}_{sc , ctrl}^{RB} ⋅ {N}_{symb , UCI}^{PUCCH} ⋅ {Q}_{m} ⋅ {r}_{LP}$ (2); and
calculate the second PRB number ${M}_{RB , min}^{PUCCH , HP}$ using formulas (3) and (4), based on the number of bits of the second UCI and the code rate of the second UCI, $\left({O}_{UCI}^{HP}+{O}_{CRC}^{HP}\right) \leq {M}_{RB , min}^{PUCCH , HP} ⋅ {N}_{sc , ctrl}^{RB} ⋅ {N}_{symb , UCI}^{PUCCH} ⋅ {Q}_{m} ⋅ {r}_{HP}$ (3) $\left({O}_{UCI}^{HP}+{O}_{CRC}^{HP}\right) > \left({M}_{RB , min}^{PUCCH , HP}-1\right) ⋅ {N}_{sc , ctrl}^{RB} ⋅ {N}_{symb , UCI}^{PUCCH} ⋅ {Q}_{m} ⋅ {r}_{HP}$ (4), where
the ${O}_{UCI}^{LP}$ represents the number of bits of the first UCI; the ${O}_{CRC}^{LP}$ represents the number of cyclic redundancy check bits corresponding to the first UCI; the ${N}_{sc , ctrl}^{RB}$ represents the number of equivalent subcarriers occupied by control information in each RB; the ${N}_{symb , UCI}^{PUCCH}$ represents the number of symbols occupied by the target PUCCH format or the number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in a case that the target PUCCH format is PUCCH format 3, the first PRB number is an integer multiple of 2, 3, or 5 and the second PRB number is an integer multiple of 2, 3, or 5; or
the number of target PRBs on the PUCCH resource for transmitting the first UCI and the second UCI is an integer multiple of 2, 3, or 5.

According to the invention, the determining module 601 is specifically configured to:
in a case that the first UCI and the second UCI are multiplexed on the same PUCCH resource and transmitted using a target PUCCH format, calculate the number of target PRBs ${M}_{RB , min}^{PUCCH}$ on the PUCCH resource for transmitting the first UCI and the second UCI using formulas (5) and (6), based on the number of bits of the first UCI, the number of bits of the second UCI, the code rate of the first UCI, and the code rate of the second UCI, $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{RB , min}^{PUCCH} ⋅ {N}_{sc , ctrl}^{RB} ⋅ {N}_{symb , UCI}^{PUCCH} ⋅ {Q}_{m}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6), where
the ${O}_{UCI}^{LP}$ represents the number of bits of the first UCI; the ${O}_{CRC}^{LP}$ represents the number of cyclic redundancy check bits corresponding to the first UCI; the ${N}_{sc , ctrl}^{RB}$ represents the number of equivalent subcarriers occupied by control information in each RB; the ${N}_{symb , UCI}^{PUCCH}$ represents the number of symbols occupied by the target PUCCH format or the number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in case that the target PUCCH format is PUCCH format 3, the number of target PRBs on the PUCCH resource for transmitting the first UCI and the second UCI is an integer multiple of 2, 3, or 5.

Optionally, the apparatus further includes:
a transmission module configured to: in a case that a first interlace and a second interlace are configured on the PUCCH resource, transmit the first UCI and the second UCI on the first interlace and the second interlace; or
in a case that the first interlace is configured on the PUCCH resource, transmit the first UCI and the second UCI on the first interlace; or
in a case that the first interlace and the second interlace are configured on the PUCCH resource and the number of PRBs included in the first interlace does not meet a target condition, transmit the first UCI and the second UCI on the first interlace and the second interlace

Optionally, the apparatus further includes:
a first rate matching and resource mapping module configured to perform rate matching and resource mapping for the first UCI within PRBs of the first PRB number; and perform rate matching and resource mapping for the second UCI within PRBs of the second PRB number

The apparatus further includes:
a second rate matching and resource mapping module configured to perform rate matching and resource mapping for both the first UCI and the second UCI within PRBs of the number of target PRBs.

According to the invention, the second rate matching and resource mapping module is specifically configured to:
determine the number of second resource elements REs meeting the code rate of the second UCI within PRBs of the number of target PRBs, based on the number of bits of the second UCI and the code rate of the second UCI; perform rate matching and resource mapping for the second UCI on the second REs; and perform rate matching and resource mapping for the first UCI on REs, except for the second REs and REs used by the DMRS, within PRBs of the number of target PRBs.

The resource determining apparatus in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine or the like, which is not specifically limited in the embodiments of this application.

The resource determining apparatus provided in this embodiment of this application can implement the processes implemented by the foregoing resource determining method embodiment, with the same technical effects achieved. To avoid repetition, details are not described herein again.

FIG. 7 is a schematic structural diagram of a terminal according to an embodiment of this application. As shown in FIG. 7, the terminal 700 provided in an embodiment of this application includes a processor 701, a memory 702, and a program or instructions stored in the memory 702 and executable on the processor 701, where when the program or instructions are executed by the processor 701, the processes of the foregoing resource determining method embodiment are implemented, with the same technical effects achieved. To avoid repetition, details are not described herein again.

An embodiment of this application further provides a terminal, including a processor and a communication interface, where the processor is configured to: in a case that first UCI and second UCI are multiplexed on a same PUCCH resource, determine the number of target PRBs on the PUCCH resource for transmitting the first UCI and the second UCI, based on the number of bits of the first UCI, the number of bits of the second UCI, a code rate of the first UCI, and a code rate of the second UCI; where a priority index of the first UCI is different from a priority index of the second UCI. This terminal embodiment corresponds to the foregoing method embodiment on the terminal side. All implementations and embodiments in the foregoing method embodiment may be applicable to this terminal embodiment, with the same technical effect achieved

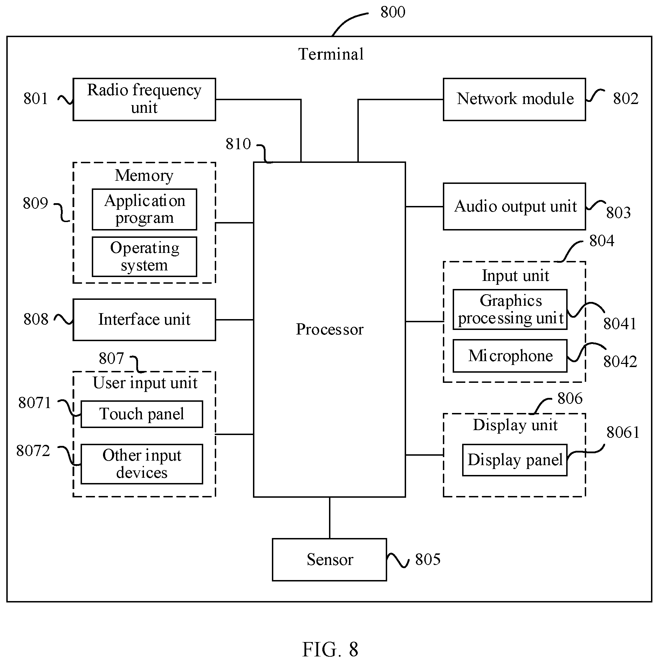

FIG. 8 is a schematic diagram of a hardware structure of a terminal implementing an embodiment of this application. The terminal 800 includes, but is not limited to, at least some of components such as a radio frequency unit 801, a network module 802, an audio output unit 803, an input unit 804, a sensor 805, a display unit 806, a user input unit 807, an interface unit 808, a memory 809, and a processor 810.

It can be understood by those skilled in the art that the terminal 800 may further include a power supply (for example, a battery) supplying power to the components. The power supply may be logically connected to the processor 810 via a power management system, so that functions such as charge management, discharge management, and power consumption management are implemented by using the power management system. The structure of the terminal shown in FIG. 8 does not constitute any limitation on the terminal, and the terminal may include more or fewer components than shown in the figure, or combine some of the components, or have different arrangements of the components. Details are not described herein.

It should be understood that in this embodiment of this application, the input unit 804 may include a graphics processing unit (graphics processing unit, GPU) 8041 and a microphone 8042. The graphics processing unit 8041 processes image data of a static picture or a video that is obtained by an image capture apparatus (for example, a camera) in an image capture mode or a video capture mode. The display unit 806 may include a display panel 8061. The display panel 8061 may be configured in a form of a liquid crystal display, an organic light-emitting diode display, or the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (for example, volume control button or a power on/off button), a trackball, a mouse, and a joystick. Details are not described herein.

In this embodiment of this application, the radio frequency unit 801 transmits downlink data received from a network-side device to the processor 810 for processing, and in addition, transmits uplink data to the network-side device. Generally, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may include a program or instruction storage area and a data storage area. The program or instruction storage area may store an operating system, an application program or instruction required by at least one function (for example, a sound playback function or an image playback function), and the like. In addition, the memory 809 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one disk storage device, flash memory device, or other non-volatile solid-state storage device.

The processor 810 may include one or more processing units. Optionally, an application processor and a modem processor may be integrated in the processor 810. The application processor primarily processes an operating system, user interfaces, application programs or instructions, and the like. The modem processor primarily processes radio communication, for example, being a baseband processor. It can be understood that the modem processor may alternatively be not integrated in the processor 810.

The processor 810 is configured to: in a case that UCI and second UCI are multiplexed on a same PUCCH resource, determine the number of target PRBs on the PUCCH resource for transmitting the first UCI and the second UCI, based on the number of bits of the first UCI, the number of bits of the second UCI, a code rate of the first UCI, and a code rate of the second UCI; where a priority index of the first UCI is different from a priority index of the second UCI.

In the terminal provided in this embodiment of this application, in a case that UCIs with different priority indexes are multiplexed on the same PUCCH resource, with consideration that UCIs with different priority indexes have different code rates, the number of PRBs used for PUCCH transmission is determined based on the number of bits and code rates of UCIs with different priority indexes. This ensures different reliability requirements for UCIs with different priority indexes and improves the effectiveness of the communication system.

Optionally, the processor 810 is specifically configured to:
in a case that the first UCI and the second UCI are multiplexed on the same PUCCH resource and transmitted using a target PUCCH format, determine a first PRB number based on the number of bits of the first UCI and the code rate of the first UCI, and
determine a second PRB number based on the number of bits of the second UCI and the code rate of the second UCI, where
the number of target PRBs on the PUCCH resource for transmitting the first UCI and the second UCI is the sum of the first PRB number and the second PRB number.

Optionally, the processor 810 is specifically configured to:
calculate the first PRB number ${M}_{RB , min}^{PUCCH , LP}$ using formulas (1) and (2), based on the number of bits of the first UCI and the code rate of the first UCI, $\left({O}_{UCI}^{LP}+{O}_{CRC}^{LP}\right) \leq {M}_{RB , min}^{PUCCH , LP} ⋅ {N}_{sc , ctrl}^{RB} ⋅ {N}_{symb , UCI}^{PUCCH} ⋅ {Q}_{m} ⋅ {r}_{LP}$ (1) $\left({O}_{UCI}^{LP}+{O}_{CRC}^{LP}\right) > \left({M}_{RB , min}^{PUCCH , LP}-1\right) ⋅ {N}_{sc , ctrl}^{RB} ⋅ {N}_{symb , UCI}^{PUCCH} ⋅ {Q}_{m} ⋅ {r}_{LP}$ (2); and
calculate the second PRB number ${M}_{RB , min}^{PUCCH , HP}$ using formulas (3) and (4), based on the number of bits of the second UCI and the code rate of the second UCI, $\left({O}_{UCI}^{HP}+{O}_{CRC}^{HP}\right) \leq {M}_{RB , min}^{PUCCH , HP} ⋅ {N}_{sc , ctrl}^{RB} ⋅ {N}_{symb , UCI}^{PUCCH} ⋅ {Q}_{m} ⋅ {r}_{HP}$ (3) $\left({O}_{UCI}^{HP}+{O}_{CRC}^{HP}\right) > \left({M}_{RB , min}^{PUCCH , HP}-1\right) ⋅ {N}_{sc , ctrl}^{RB} ⋅ {N}_{symb , UCI}^{PUCCH} ⋅ {Q}_{m} ⋅ {r}_{HP}$ (4), where
the ${O}_{UCI}^{LP}$ represents the number of bits of the first UCI; the ${O}_{CRC}^{LP}$ represents the number of cyclic redundancy check bits corresponding to the first UCI; the ${N}_{sc , ctrl}^{RB}$ represents the number of equivalent subcarriers occupied by control information in each RB; the ${N}_{symb , UCI}^{PUCCH}$ represents the number of symbols occupied by the target PUCCH format or the number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in a case that the target PUCCH format is PUCCH format 3, the first PRB number is an integer multiple of 2, 3, or 5 and the second PRB number is an integer multiple of 2, 3, or 5; or
the number of target PRBs on the PUCCH resource for transmitting the first UCI and the second UCI is an integer multiple of 2, 3, or 5.

The processor 810 is specifically configured to:
in a case that the first UCI and the second UCI are multiplexed on the same PUCCH resource and transmitted using a target PUCCH format, calculate the number of target PRBs ${M}_{RB , min}^{PUCCH}$ on the PUCCH resource for transmitting the first UCI and the second UCI using formulas (5) and (6), based on the number of bits of the first UCI, the number of bits of the second UCI, the code rate of the first UCI, and the code rate of the second UCI, $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{RB , min}^{PUCCH} ⋅ {N}_{sc , ctrl}^{RB} ⋅ {N}_{symb , UCI}^{PUCCH} ⋅ {Q}_{m}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6), where
the ${O}_{UCI}^{LP}$ represents the number of bits of the first UCI; the ${O}_{CRC}^{LP}$ represents the number of cyclic redundancy check bits corresponding to the first UCI; the ${N}_{sc , ctrl}^{RB}$ represents the number of equivalent subcarriers occupied by control information in each RB; the ${N}_{symb , UCI}^{PUCCH}$ represents the number of symbols occupied by the target PUCCH format or the number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents the number of cyclic redundancy check bits corresponding to the second UCI; and the *r_{HP}* represents the code rate of the second UCI.

Optionally, in case that the target PUCCH format is PUCCH format 3, the number of target PRBs on the PUCCH resource for transmitting the first UCI and the second UCI is an integer multiple of 2, 3, or 5.

Optionally, the radio frequency unit 801 is configured to:
in a case that a first interlace and a second interlace are configured on the PUCCH resource, transmit the first UCI and the second UCI on the first interlace and the second interlace; or
in a case that the first interlace is configured on the PUCCH resource, transmit the first UCI and the second UCI on the first interlace; or
in a case that the first interlace and the second interlace are configured on the PUCCH resource and the number of PRBs included in the first interlace does not meet a target condition, transmit the first UCI and the second UCI on the first interlace and the second interlace.

Optionally, the processor 810 is specifically configured to:
perform rate matching and resource mapping for the first UCI within PRBs of the first PRB number; or
perform rate matching and resource mapping for the second UCI within PRBs of the second PRB number.

The processor 810 is specifically configured to perform rate matching and resource mapping for both the first UCI and the second UCI within PRBs of the number of target PRBs.

The processor 810 is specifically configured to:
determine the number of second resource elements REs meeting the code rate of the second UCI within PRBs of the number of target PRBs, based on the number of bits of the second UCI and the code rate of the second UCI; perform rate matching and resource mapping for the second UCI on the second REs; and perform rate matching and resource mapping for the first UCI on REs, except for the second REs and REs used by the DMRS, within PRBs of the number of target PRBs.

An embodiment of this application further provides a readable storage medium, where the readable storage medium stores a program or instructions, and when the program or instructions are executed by a processor, the processes of the foregoing resource determining method embodiments are implemented, with the same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

Another embodiment of this application provides a chip, where the chip includes a processor and a communication interface, the communication interface is coupled to the processor, and the processor is configured to run a program or instructions to implement the processes of the foregoing resource determining method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a non-transitory storage medium. When the computer program/program product is executed by at least one processor, the processes of the foregoing resource determining method embodiment are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from the protection scope of the claims, and all such manners fall within the protection scope of this application. The invention is defined by the appended claims.

## Claims

1. A resource determining method, performed by a terminal (11) and comprising:
in a case that first uplink control information, UCI, and second UCI are multiplexed on a same physical uplink control channel, PUCCH, resource, determining (201) a number of target physical resource blocks, PRBs, on the PUCCH resource for transmitting the first UCI and the second UCI, based on a number of bits of the first UCI, a number of bits of the second UCI, a code rate of the first UCI, and a code rate of the second UCI; wherein
a priority index of the first VCI is different from a priority index of the second UCI;
wherein the determining (201) comprises:
in a case that the first UCI and the second UCI are multiplexed on the same PUCCH resource and transmitted using a target PUCCH format, calculating the number of target PRBs ${M}_{RB , min}^{PUCCH}$ on the PUCCH resource for transmitting the first UCI and the second UCI using formulas (5) and (6), based on the number of bits of the first UCI, the number of bits of the second UCI, the code rate of the first UCI, and the code rate of the second UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); wherein
the ${O}_{UCI}^{LP}$ represents the number of bits of the first UCI; the ${O}_{CRC}^{LP}$ represents a number of cyclic redundancy check bits corresponding to the first UCI; the ${N}_{sc , ctrl}^{RB}$ represents a number of equivalent subcarriers occupied by control information in each RB; the ${N}_{symb , UCI}^{PUCCH}$ represents a number of symbols occupied by the target PUCCH format or a number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents a number of cyclic redundancy check bits corresponding to the second UCI; and the *r_{HP}* represents the code rate of the second UCI;
wherein the method further comprises:
performing rate matching and resource mapping for both the first UCI and the second UCI within PRBs of the number of target PRBs;
**characterized in that** the performing rate matching and resource mapping for both the first UCI and the second UCI within PRBs of the number of target PRBs comprises:
determining a number of second REs meeting the code rate of the second UCI within PRBs of the number of target PRBs, based on the number of bits of the second UCI and the code rate of the second UCI; perform rate matching and resource mapping for the second UCI on the second REs; and perform rate matching and resource mapping for the first UCI on REs, except for the second REs and REs used by the DMRS, within PRBs of the number of target PRBs.

2. The resource determining method according to claim 1, wherein in a case that the target PUCCH format is PUCCH format 3, the number of target PRBs on the PUCCH resource for transmitting the first UCI and the second UCI is an integer multiple of 2, 3, or 5.

3. The resource determining method according to claim 1, wherein the method further comprises:
in a case that a first one interlace is configured on the PUCCH resource, transmitting the first UCI and the second UCI on the first one interlace; or
in a case that the first one interlace and a second one interlace are configured on the PUCCH resource and a number of PRBs comprised in the first one interlace does not meet a 1 target condition, transmitting the first UCI and the second UCI on the first one interlace and the second one interlace.

4. The resource determining method according to claim 1, wherein the target PUCCH format comprises PUCCH format 2 or PUCCH format 3.

5. The resource determining method according to claim 3, wherein the target condition comprises that the number of PRBs ${M}_{interlace , 0}^{PUCCH}$ comprised in the first one interlace meets formula (10): $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); wherein the ${M}_{interlace , 0}^{PUCCH}$ represents the number of PRBs comprised in the first one interlace.

6. A resource determining apparatus (600), comprising:
a determining module (601) configured to: in a case that first uplink control information, UCI, and second UCI are multiplexed on a same physical uplink control channel, PUCCH, resource, determine a number of target physical resource blocks, PRBs, on the PUCCH resource for transmitting the first UCI and the second UCI, based on a number of bits of the first UCI, a number of bits of the second UCI, a code rate of the first UCI, and a code rate of the second UCI; wherein
a priority index of the first UCI is different from a priority index of the second UCI;
wherein the determining module (601) is specifically configured to:
in a case that the first UCI and the second UCI are multiplexed on the same PUCCH resource and transmitted using a target PUCCH format, calculate the number of target PRBs ${M}_{RB , min}^{PUCCH}$ on the PUCCH resource for transmitting the first UCI and the second UCI using formulas (5) and (6), based on the number of bits of the first UCI, the number of bits of the second UCI, the code rate of the first UCI, and the code rate of the second UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); wherein
the ${O}_{UCI}^{LP}$ represents the number of bits of the first UCI; the ${O}_{CRC}^{LP}$ represents a number of cyclic redundancy check bits corresponding to the first UCI; the ${N}_{sc , ctrl}^{RB}$ represents a number of equivalent subcarriers occupied by control information in each RB; the ${N}_{symb , UCI}^{PUCCH}$ represents a number of symbols occupied by the target PUCCH format or a number of symbols occupied by UCI in the target PUCCH format; the *Qₘ* represents a modulation and coding order; the *r_{LP}* represents the code rate of the first UCI; the ${O}_{UCI}^{HP}$ represents the number of bits of the second UCI; the ${O}_{CRC}^{HP}$ represents a number of cyclic redundancy check bits corresponding to the second UCI; and the *r_{HP}* represents the code rate of the second UCI;
wherein the apparatus (600) further comprises:
a second rate matching and resource mapping module configured to perform rate matching and resource mapping for both the first UCI and the second UCI within PRBs of the number of target PRBs;
**characterized in that** the second rate matching and resource mapping module is specifically configured to:
determine a number of second REs meeting the code rate of the second UCI within PRBs of the number of target PRBs, based on the number of bits of the second UCI and the code rate of the second UCI; perform rate matching and resource mapping for the second UCI on the second REs; and perform rate matching and resource mapping for the first UCI on REs, except for the second REs and REs used by the DMRS, within PRBs of the number of target PRBs.

7. The resource determining apparatus (600) according to claim 6, wherein in a case that the target PUCCH format is PUCCH format 3, the number of target PRBs on the PUCCH resource for transmitting the first UCI and the second UCI is an integer multiple of 2, 3, or 5.

8. The resource determining apparatus (600) according to claim 6, wherein the apparatus (600) further comprises:
a transmission module configured to: in a case that a first one interlace is configured on the PUCCH resource, transmit the first UCI and the second UCI on the first one interlace; or
in a case that the first one interlace and a second one interlace are configured on the PUCCH resource and a number of PRBs comprised in the first one interlace does not meet a target condition, transmit the first UCI and the second UCI on the first one interlace and the second one interlace.

9. The resource determining apparatus (600) according to claim 6, wherein the target PUCCH format comprises PUCCH format 2 or PUCCH format 3.

10. The resource determining apparatus (600) according to claim 8, wherein the target condition comprises that the number of PRBs ${M}_{interlace , 0}^{PUCCH}$ comprised in the first one interlace meets formula (10): $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); wherein the ${M}_{interlace , 0}^{PUCCH}$ represents the number of PRBs comprised in the first one interlace.

11. A readable storage medium, wherein the readable storage medium stores a program or instructions, and when the program or instructions are executed by a processor (810), the steps of the resource determining method according to any one of claims 1 to 5 are implemented.

## Patentansprüche

1. Ein Ressourcenbestimmungsverfahren, das von einem Terminal (11) durchgeführt wird und Folgendes beinhaltet:
in einem Fall, dass erste Uplink-Steuerungsinformationen, UCI, und zweite UCI gemeinsam auf einer selben physikalischen Uplink-Steuerungskanalressource, PUCCH-Ressource, übermittelt werden, Bestimmen (201) einer Zahl von physikalischen Ziel-Ressourcenblöcken, Ziel-PRBs, auf der PUCCH-Ressource zum Übertragen der ersten UCI und der zweiten UCI basierend auf einer Zahl von Bits der ersten UCI, einer Zahl von Bits der zweiten UCI, einem Codefaktor der ersten UCI und einem Codefaktor der zweiten UCI; wobei
ein Prioritätsindex der ersten UCI sich von einem Prioritätsindex der zweiten UCI unterscheidet;
wobei das Bestimmen (201) Folgendes beinhaltet:
in einem Fall, dass die ersten UCI und die zweiten UCI gemeinsam auf derselben PUCCH-Ressource übermittelt und unter Verwendung eines Ziel-PUCCH-Formats übertragen werden, Berechnen der Zahl von Ziel-PRBs ${M}_{RB , min}^{PUCCH}$ auf der PUCCH-Ressource zum Übertragen der ersten UCI und der zweiten UCI unter Verwendung der Formeln (5) und (6) basierend auf der Zahl von Bits der ersten UCI, der Zahl von Bits der zweiten UCI, dem Codefaktor der ersten UCI und dem Codefaktor der zweiten UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); wobei
${O}_{UCI}^{LP}$ die Zahl von Bits der ersten UCI darstellt; ${O}_{CRC}^{LP}$ eine Zahl von Bits für zyklische Redundanzchecks, die den ersten UCI entsprechen, darstellt; ${N}_{sc , ctrl}^{RB}$ eine Zahl von äquivalenten Subträgern darstellt, die in jedem RB von Steuerungsinformationen eingenommen werden; ${N}_{symb , UCI}^{PUCCH}$ eine Zahl von Symbolen, die von dem Ziel-PUCCH-Format eingenommen werden, oder eine Zahl von Symbolen, die von UCI in dem Ziel-PUCCH-Format eingenommen werden, darstellt; *Qₘ* eine Modulations- und Codierungsreihenfolge darstellt; *r_{LP}* den Codefaktor der ersten UCI darstellt; ${O}_{UCI}^{HP}$ die Zahl von Bits der zweiten UCI darstellt; ${O}_{CRC}^{HP}$ eine Zahl von Bits für zyklische Redundanzchecks, die den zweiten UCI entsprechen, darstellt; und *r_{HP}* den Codefaktor der zweiten UCI darstellt;
wobei das Verfahren ferner Folgendes beinhaltet:
Durchführen von Faktorabstimmung und Ressourcenzuordnung für sowohl die ersten UCI als auch die zweiten UCI innerhalb von PRBs der Zahl von Ziel-PRBs;
**dadurch gekennzeichnet, dass** das Durchführen von Faktorabstimmung und Ressourcenzuordnung für sowohl die ersten UCI als auch die zweiten UCI innerhalb von PRBs der Zahl von Ziel-PRBs Folgendes beinhaltet:
Bestimmen einer Zahl von zweiten REs, die den Codefaktor der zweiten UCI erfüllen, innerhalb von PRBs der Zahl von Ziel-PRBs basierend auf der Zahl von Bits der zweiten UCI und dem Codefaktor der zweiten UCI; Durchführen von Faktorabstimmung und Ressourcenzuordnung für die zweiten UCI auf den zweiten REs; und Durchführen von Faktorabstimmung und Ressourcenzuordnung für die ersten UCI auf REs, außer für die zweiten REs und REs, die durch das DMRS verwendet werden, innerhalb von PRBs der Zahl von Ziel-PRBs.

2. Ressourcenbestimmungsverfahren gemäß Anspruch 1, wobei in einem Fall, dass das Ziel-PUCCH-Format das PUCCH-Format 3 ist, die Zahl von Ziel-PRBs auf der PUCCH-Ressource zum Übertragen der ersten UCI und der zweiten UCI ein ganzzahliges Vielfaches von 2, 3 oder 5 ist.

3. Ressourcenbestimmungsverfahren gemäß Anspruch 1, wobei das Verfahren ferner Folgendes beinhaltet:
in einem Fall, dass eine erste Verschachtelung auf der PUCCH-Ressource konfiguriert ist, Übertragen der ersten UCI und der zweiten UCI auf der ersten Verschachtelung; oder
in einem Fall, dass die erste Verschachtelung und eine zweite Verschachtelung auf der PUCCH-Ressource konfiguriert sind und eine Zahl von PRBs, die in der ersten Verschachtelung beinhaltet sind, eine Zielbedingung nicht erfüllt, Übertragen der ersten UCI und der zweiten UCI auf der ersten Verschachtelung und der zweiten Verschachtelung.

4. Ressourcenbestimmungsverfahren gemäß Anspruch 1, wobei das Ziel-PUCCH-Format das PUCCH-Format 2 oder PUCCH-Format 3 beinhaltet.

5. Ressourcenbestimmungsverfahren gemäß Anspruch 3, wobei die Zielbedingung beinhaltet, dass die Zahl von PRBs ${M}_{interlace , 0}^{PUCCH}$, die in der ersten Verschachtelung beinhaltet sind, die Formel (10) erfüllt: $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); wobei ${M}_{interlace , 0}^{PUCCH}$ die Zahl von PRBs darstellt, die in der ersten Verschachtelung beinhaltet sind.

6. Eine Ressourcenbestimmungsvorrichtung (600), die Folgendes beinhaltet:
ein Bestimmungsmodul (601), das zu Folgendem konfiguriert ist: in einem Fall, dass erste Uplink-Steuerungsinformationen, UCI, und zweite UCI gemeinsam auf einer selben physikalischen Uplink-Steuerungskanalressource, PUCCH-Ressource, übermittelt werden, Bestimmen einer Zahl von physikalischen Ziel-Ressourcenblöcken, Ziel-PRBs, auf der PUCCH-Ressource zum Übertragen der ersten UCI und der zweiten UCI basierend auf einer Zahl von Bits der ersten UCI, einer Zahl von Bits der zweiten UCI, einem Codefaktor der ersten UCI und einem Codefaktor der zweiten UCI; wobei ein Prioritätsindex der ersten UCI sich von einem Prioritätsindex der zweiten UCI unterscheidet;
wobei das Bestimmungsmodul (601) speziell zu Folgendem konfiguriert ist:
in einem Fall, dass die ersten UCI und die zweiten UCI gemeinsam auf derselben PUCCH-Ressource übermittelt und unter Verwendung eines Ziel-PUCCH-Formats übertragen werden, Berechnen der Zahl von Ziel-PRBs ${M}_{RB , min}^{PUCCH}$ auf der PUCCH-Ressource zum Übertragen der ersten UCI und der zweiten UCI unter Verwendung der Formeln (5) und (6) basierend auf der Zahl von Bits der ersten UCI, der Zahl von Bits der zweiten UCI, dem Codefaktor der ersten UCI und dem Codefaktor der zweiten UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); wobei
${O}_{UCI}^{LP}$ die Zahl von Bits der ersten UCI darstellt; ${O}_{CRC}^{LP}$ eine Zahl von Bits für zyklische Redundanzchecks, die den ersten UCI, entsprechen, darstellt; ${N}_{sc , ctrl}^{RB}$ eine Zahl von äquivalenten Subträgern darstellt, die in jedem RB von Steuerungsinformationen eingenommen werden; ${N}_{symb , UCI}^{PUCCH}$ eine Zahl von Symbolen, die von dem Ziel-PUCCH-Format eingenommen werden, oder eine Zahl von Symbolen, die von UCI in dem Ziel-PUCCH-Format eingenommen werden, darstellt; *Qₘ* eine Modulations- und Codierungsreihenfolge darstellt; *r_{LP}* den Codefaktor der ersten UCI darstellt; ${O}_{UCI}^{HP}$ die Zahl von Bits der zweiten UCI darstellt; ${O}_{CRC}^{HP}$ eine Zahl von Bits für zyklische Redundanzchecks, die den zweiten UCI entsprechen, darstellt; und *r_{HP}* den Codefaktor der zweiten UCI darstellt;
wobei die Vorrichtung (600) ferner Folgendes beinhaltet:
ein zweites Faktorabstimmungs- und Ressourcenzuordnungsmodul, das dazu konfiguriert ist, Faktorabstimmung und Ressourcenzuordnung sowohl für die ersten UCI als auch die zweiten UCI innerhalb von PRBs der Zahl von Ziel-PRBs durchzuführen;
**dadurch gekennzeichnet, dass** das zweite Faktorabstimmungs- und Ressourcenzuordnungsmodul speziell zu Folgendem konfiguriert ist:
Bestimmen einer Zahl von zweiten REs, die den Codefaktor der zweiten UCI erfüllen, innerhalb von PRBs der Zahl von Ziel-PRBs basierend auf der Zahl von Bits der zweiten UCI und dem Codefaktor der zweiten UCI; Durchführen von Faktorabstimmung und Ressourcenzuordnung für die zweiten UCI auf den zweiten REs; und Durchführen von Faktorabstimmung und Ressourcenzuordnung für die ersten UCI auf REs, außer für die zweiten REs und REs, die durch das DMRS verwendet werden, innerhalb von PRBs der Zahl von Ziel-PRBs.

7. Ressourcenbestimmungsvorrichtung (600) gemäß Anspruch 6, wobei in einem Fall, dass das Ziel-PUCCH-Format das PUCCH-Format 3 ist, die Zahl von Ziel-PRBs auf der PUCCH-Ressource zum Übertragen der ersten UCI und der zweiten UCI ein ganzzahliges Vielfaches von 2, 3 oder 5 ist.

8. Ressourcenbestimmungsvorrichtung (600) gemäß Anspruch 6, wobei die Vorrichtung (600) ferner Folgendes beinhaltet:
ein Übertragungsmodul, das zu Folgendem konfiguriert ist: in einem Fall, dass eine erste Verschachtelung auf der PUCCH-Ressource konfiguriert ist, Übertragen der ersten UCI und der zweiten UCI auf der ersten Verschachtelung; oder
in einem Fall, dass die erste Verschachtelung und eine zweite Verschachtelung auf der PUCCH-Ressource konfiguriert sind und eine Zahl von PRBs, die in der ersten Verschachtelung beinhaltet sind, eine Zielbedingung nicht erfüllt, Übertragen der ersten UCI und der zweiten UCI auf der ersten Verschachtelung und der zweiten Verschachtelung.

9. Ressourcenbestimmungsvorrichtung (600) gemäß Anspruch 6, wobei das Ziel-PUCCH-Format das PUCCH-Format 2 oder PUCCH-Format 3 beinhaltet.

10. Ressourcenbestimmungsvorrichtung (600) gemäß Anspruch 8, wobei die Zielbedingung beinhaltet, dass die Zahl von PRBs ${M}_{interlace , 0}^{PUCCH}$, die in der ersten Verschachtelung beinhaltet sind, die Formel (10) erfüllt: $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); wobei ${M}_{interlace , 0}^{PUCCH}$ die Zahl von PRBs darstellt, die in der ersten Verschachtelung beinhaltet sind.

11. Ein lesbares Speichermedium, wobei das lesbare Speichermedium ein Programm oder Anweisungen speichert und, wenn das Programm oder die Anweisungen von einem Prozessor (810) ausgeführt werden, die Schritte des Ressourcenbestimmungsverfahrens gemäß einem der Ansprüche 1 bis 5 umgesetzt werden.

## Revendications

1. Un procédé de détermination de ressource, réalisé par un terminal (11) et comprenant :
dans un cas où des premières informations de commande de liaison montante, UCI, et des deuxièmes UCI sont multiplexées sur une même ressource de canal physique de commande de liaison montante, PUCCH, la détermination (201) d'un nombre de blocs de ressources physiques, PRB, cibles sur la ressource PUCCH pour transmettre les premières UCI et les deuxièmes UCI, sur la base d'un nombre de bits des premières UCI, d'un nombre de bits des deuxièmes UCI, d'un taux de codage des premières UCI, et d'un taux de codage des deuxièmes UCI ; dans lequel
un indice de priorité des premières UCI est différent d'un indice de priorité des deuxièmes UCI ;
dans lequel la détermination (201) comprend :
dans un cas où les premières UCI et les deuxièmes UCI sont multiplexées sur la même ressource PUCCH et transmises en utilisant un format de PUCCH cible, le calcul du nombre de PRB cibles ${M}_{RB , min}^{PUCCH}$ sur la ressource PUCCH pour transmettre les premières UCI et les deuxièmes UCI en utilisant les formules (5) et (6), sur la base du nombre de bits des premières UCI, du nombre de bits des deuxièmes UCI, du taux de codage des premières UCI, et du taux de codage des deuxièmes UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); dans lesquelles
${O}_{UCI}^{LP}$ représente le nombre de bits des premières UCI ; ${O}_{CRC}^{LP}$ représente un nombre de bits de contrôle de redondance cyclique correspondant aux premières UCI ; ${N}_{sc , ctrl}^{RB}$ représente un nombre de sous-porteuses équivalentes occupées par des informations de commande dans chaque RB ; ${N}_{symb , UCI}^{PUCCH}$ représente un nombre de symboles occupés par le format de PUCCH cible ou un nombre de symboles occupés par des UCI dans le format de PUCCH cible ; *Qₘ* représente un ordre de modulation et de codage ; *r_{LP}* représente le taux de codage des premières UCI ; ${O}_{UCI}^{HP}$ représente le nombre de bits des deuxièmes UCI ; ${O}_{CRC}^{HP}$ représente un nombre de bits de contrôle de redondance cyclique correspondant aux deuxièmes UCI ; et *r_{HP}* représente le taux de codage des deuxièmes UCI ;
le procédé comprenant en outre :
la réalisation d'une adaptation de débit et d'un mappage de ressources pour à la fois les premières UCI et les deuxièmes UCI au sein de PRB du nombre de PRB cibles ;
**caractérisé en ce que** la réalisation d'une adaptation de débit et d'un mappage de ressources pour à la fois les premières UCI et les deuxièmes UCI au sein de PRB du nombre de PRB cibles comprend :
la détermination d'un nombre de deuxièmes RE satisfaisant au taux de codage des deuxièmes UCI au sein de PRB du nombre de PRB cibles, sur la base du nombre de bits des deuxièmes UCI et du taux de codage des deuxièmes UCI ; réaliser une adaptation de débit et un mappage de ressources pour les deuxièmes UCI sur les deuxièmes RE ; et réaliser une adaptation de débit et un mappage de ressources pour les premières UCI sur des RE, à l'exception des deuxièmes RE et des RE utilisés par le DMRS, au sein de PRB du nombre de PRB cibles.

2. Le procédé de détermination de ressource selon la revendication 1, dans lequel dans un cas où le format de PUCCH cible est un format de PUCCH 3, le nombre de PRB cibles sur la ressource PUCCH pour transmettre les premières UCI et les deuxièmes UCI est un multiple entier de 2, 3, ou 5.

3. Le procédé de détermination de ressource selon la revendication 1, le procédé comprenant en outre :
dans un cas où un premier entrelacement unique est configuré sur la ressource PUCCH, la transmission des premières UCI et des deuxièmes UCI sur le premier entrelacement unique ; ou
dans un cas où le premier entrelacement unique et un deuxième entrelacement unique sont configurés sur la ressource PUCCH et un nombre de PRB compris dans le premier entrelacement unique ne satisfait pas à une condition cible, la transmission des premières UCI et des deuxièmes UCI sur le premier entrelacement unique et le deuxième entrelacement unique.

4. Le procédé de détermination de ressource selon la revendication 1, dans lequel le format de PUCCH cible comprend un format de PUCCH 2 ou un format de PUCCH 3.

5. Le procédé de détermination de ressource selon la revendication 3, dans lequel la condition cible comprend le fait que le nombre de PRB ${M}_{interlace , 0}^{PUCCH}$ compris dans le premier entrelacement unique satisfait à la formule (10) : $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); dans laquelle ${M}_{interlace , 0}^{PUCCH}$ représente le nombre de PRB compris dans le premier entrelacement unique.

6. Un appareil de détermination de ressource (600), comprenant :
un module de détermination (601) configuré pour : dans un cas où des premières informations de commande de liaison montante, UCI, et des deuxièmes UCI sont multiplexées sur une même ressource de canal physique de commande de liaison montante, PUCCH, déterminer un nombre de blocs de ressources physiques, PRB, cibles sur la ressource PUCCH pour transmettre les premières UCI et les deuxièmes UCI, sur la base d'un nombre de bits des premières UCI, d'un nombre de bits des deuxièmes UCI, d'un taux de codage des premières UCI, et d'un taux de codage des deuxièmes UCI ; dans lequel
un indice de priorité des premières UCI est différent d'un indice de priorité des deuxièmes UCI ;
dans lequel le module de détermination (601) est spécifiquement configuré pour :
dans un cas où les premières UCI et les deuxièmes UCI sont multiplexées sur la même ressource PUCCH et transmises en utilisant un format de PUCCH cible, calculer le nombre de PRB cibles ${M}_{RB , min}^{PUCCH}$ sur la ressource PUCCH pour transmettre les premières UCI et les deuxièmes UCI en utilisant les formules (5) et (6), sur la base du nombre de bits des premières UCI, du nombre de bits des deuxièmes UCI, du taux de codage des premières UCI, et du taux de codage des deuxièmes UCI, $\left({O}_{UCI}^{HP}+{O}_{CRC}^{HP}\right) ⋅ {r}_{LP} + \left({O}_{UCI}^{LP}+{O}_{CRC}^{LP}\right) ⋅ {r}_{HP} \leq {M}_{RB , min}^{PUCCH} ⋅ {N}_{sc , ctrl}^{RB} ⋅ {N}_{symb , UCI}^{PUCCH} ⋅ {Q}_{m} ⋅ {r}_{LP} ⋅ {r}_{HP}$ (5) $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} > \left({M}_{RB , min}^{PUCCH}-1\right) ⋅ {N}_{sc , ctrl}^{RB} ⋅ {N}_{symb , UCI}^{PUCCH} ⋅ {Q}_{m}$ (6); dans lesquelles
${O}_{UCI}^{LP}$ représente le nombre de bits des premières UCI ; ${O}_{CRC}^{LP}$ représente un nombre de bits de contrôle de redondance cyclique correspondant aux premières UCI ; ${N}_{sc , ctrl}^{RB}$ représente un nombre de sous-porteuses équivalentes occupées par des informations de commande dans chaque RB ; ${N}_{symb , UCI}^{PUCCH}$ représente un nombre de symboles occupés par le format de PUCCH cible ou un nombre de symboles occupés par des UCI dans le format de PUCCH cible ; *Qₘ* représente un ordre de modulation et de codage ; *r_{LP}* représente le taux de codage des premières UCI ; ${O}_{UCI}^{HP}$ représente le nombre de bits des deuxièmes UCI ; ${O}_{CRC}^{HP}$ représente un nombre de bits de contrôle de redondance cyclique correspondant aux deuxièmes UCI ; et *r_{HP}* représente le taux de codage des deuxièmes UCI ;
l'appareil (600) comprenant en outre :
un deuxième module d'adaptation de débit et de mappage de ressources configuré pour réaliser une adaptation de débit et un mappage de ressources pour à la fois les premières UCI et les deuxièmes UCI au sein de PRB du nombre de PRB cibles ;
**caractérisé en ce que** le deuxième module d'adaptation de débit et de mappage de ressources est spécifiquement configuré pour :
déterminer un nombre de deuxièmes RE satisfaisant au taux de codage des deuxièmes UCI au sein de PRB du nombre de PRB cibles, sur la base du nombre de bits des deuxièmes UCI et du taux de codage des deuxièmes UCI ; réaliser une adaptation de débit et un mappage de ressources pour les deuxièmes UCI sur les deuxièmes RE ; et réaliser une adaptation de débit et un mappage de ressources pour les premières UCI sur des RE, à l'exception des deuxièmes RE et des RE utilisés par le DMRS, au sein de PRB du nombre de PRB cibles.

7. L'appareil de détermination de ressource (600) selon la revendication 6, dans lequel dans un cas où le format de PUCCH cible est un format de PUCCH 3, le nombre de PRB cibles sur la ressource PUCCH pour transmettre les premières UCI et les deuxièmes UCI est un multiple entier de 2, 3, ou 5.

8. L'appareil de détermination de ressource (600) selon la revendication 6, l'appareil (600) comprenant en outre :
un module de transmission configuré pour : dans un cas où un premier entrelacement unique est configuré sur la ressource PUCCH, transmettre les premières UCI et les deuxièmes UCI sur le premier entrelacement unique ; ou
dans un cas où le premier entrelacement unique et un deuxième entrelacement unique sont configurés sur la ressource PUCCH et un nombre de PRB compris dans le premier entrelacement unique ne satisfait pas à une condition cible, transmettre les premières UCI et les deuxièmes UCI sur le premier entrelacement unique et le deuxième entrelacement unique.

9. L'appareil de détermination de ressource (600) selon la revendication 6, dans lequel le format de PUCCH cible comprend un format de PUCCH 2 ou un format de PUCCH 3.

10. L'appareil de détermination de ressource (600) selon la revendication 8, dans lequel la condition cible comprend le fait que le nombre de PRB ${M}_{interlace , 0}^{PUCCH}$ compris dans le premier entrelacement unique satisfait à la formule (10) : $\frac{{O}_{UCI}^{HP} + {O}_{CRC}^{HP}}{{r}_{HP}} + \frac{{O}_{UCI}^{LP} + {O}_{CRC}^{LP}}{{r}_{LP}} \leq {M}_{interlace , 0}^{PUCCH} ⋅ {N}_{sc , ctrl}^{RB} ⋅ {N}_{symb , UCI}^{PUCCH} ⋅ {Q}_{m}$ (10); dans laquelle ${M}_{interlace , 0}^{PUCCH}$ représente le nombre de PRB compris dans le premier entrelacement unique.

11. Un support de stockage lisible, le support de stockage lisible stockant un programme ou des instructions, et, lorsque le programme ou les instructions sont exécutés par un processeur (810), les étapes du procédé de détermination de ressource selon l'une quelconque des revendications 1 à 5 étant mises en œuvre.
